# EUROPÄISCHE PATENTANMELDUNG

(11) **EP 0 968 881 A1**
(43) Veröffentlichungstag der Anmeldung: **05.01.2000**
(21) Anmeldenummer: 98112138.7
(22) Anmeldetag: 01.07.1998
(51) Int. Cl.: B60R 13/00

(54) **Vorrichtung zum Halten von Objecten an Fahrzeugkarosserien**

(71) Anmelder: Teichgräber, Bernd, 33415 Verl (DE); Weber, Rolf, 8427 Freienstein (CH)
(72) Erfinder: Teichgräber, Bernd, 33415 Verl (DE); Weber, Rolf, 8427 Freienstein (CH)
(74) Vertreter: Hanewinkel, Lorenz, Dipl.-Phys.

(57) **Zusammenfassung**

Die Vorrichtung zum Halten von Objekten (1) an Fahrzeugkarosserien weist eine an der Karosserie (2) befestigte Basis (3) und ein mittels einer Faltenscheibe (5) mit der Basis (3) verbundenes, das Objekt (1) tragendes Trägerelement (4) auf. Die Faltenscheibe (5) weist hierbei in ihrem Mittelpunktsbereich eine Sockelfläche (6) auf, an welcher das Trägerelement (4) mit der Faltenscheibe (5) verbunden ist. Um die Sockelfläche (6) herum weist die Faltenscheibe (5) mehrere ringförmige, konzentrische Falten (7) auf. Die Faltenscheibe (5) ist an ihrem äußeren Rand (8) zumindest punktuell entlang ihres Umfangs in oder an der Basis (3) gehalten.

## Beschreibung

Die Erfindung betrifft eine Vorrichtung zum Halten von Objekten an Fahrzeugkarosserien.

Derartige Vorrichtungen werden z.B. zum Halten von Kühlerfiguren, Standarten, Wimpeln o.dgl. auf der Motorhaube von Kraftfahrzeugen verwendet. Der Begriff Fahrzeug im Sinne dieser Schrift umfaßt selbstverständlich alle Arten von Land-, Luft-, oder Wasserfahrzeugen wie z.B. KFZ, Zweiräder, Boote aber auch Anhänger, Wohnwagen etc.

Um bei Unfällen die Verletzungsgefahr für die beteiligten Personen durch das meist starre Objekt so gering wie möglich zu halten bzw. möglichst ganz zu vermeiden, muß eine solche Halterung so konstruiert sein, daß beim Aufprall eines Körpers auf das Objekt bzw. die Halterung, diese sich entweder löst, so daß das Objekt wegfliegen kann, oder aber zumindest derart nachgibt, daß sich das Objekt in eine für die Person möglichst gefahrlose Position in Kollisionsrichtung des auftreffenden Körpers wegbiegt und z.B. flach auf die Motorhaube legt. Diese Funktion der Halterung muß sicher gewährleistet sein, unabhängig davon, aus welcher Richtung der Körper auf das Objekt auftrifft.

Es ist daher Aufgabe der Erfindung, eine einfache und kostengünstige Halterung der eingangs genannten Art zu schaffen, welche auch nachträglich ohne großen Aufwand an einer Karosserie angebracht werden kann und welche so beschaffen ist, daß in einem Kollisionsfalle, d.h. beim Auftreffen eines Körpers auf das gehaltene Objekt, die Halterung in eine beliebige Richtung nachgeben kann und das Objekt möglichst flach an die Karosserieoberfläche angelegt wird.

Diese Aufgabe wird durch eine Vorrichtung mit den Merkmalen des Anspruchs 1 gelöst.

Durch die erfindungsgemäße Faltenscheibe ist das Trägerelement mit dem Objekt auf einfache Weise so mit der an der Karosserie befestigten Basis verbunden, daß bei einem plötzlich auftreffenden Schlag auf das Objekt von einer beliebigen Seite, das Trägerelement auf der Basis in die entsprechende Richtung bis zu einer parallel zur Basis liegenden Position wegkippen kann.

Die Faltenscheibe weist hierzu in ihrem Mittelpunktsbereich vorzugsweise eine kreisförmige Sockelfläche auf, an welcher das Trägerelement mit der Faltenscheibe verbunden ist. Um die Sockelfläche herum befinden sich mehrere ringförmige, konzentrische Falten, und an ihrem äußeren Rand ist die Faltenscheibe zumindest punktuell entlang ihres Umfangs in oder an der Basis gehalten.

Vorteilhafterweise sind die Falten in einer Ursprungslage, d.h. bei senkrecht zur Basis stehendem Trägerelement, von konzentrischen, im Querschnitt axial parallel oder zick-zack-förmig zueinander angeordneten Ringstegen gebildet, welche wechselweise entlang ihres oberen und unteren Randes durch filmartige Verbindungen miteinander verkettet sind. Der innerste Ringsteg ist mit der Sockelfläche verbunden und der äußerste Ringsteg ist mit dem in oder an der Basis gehaltenen Rand verbunden. Bei einer Kippbewegung des Trägerelements gegenüber der Basis wird zunächst der mit der Sockelfläche verbundene innerste Ringsteg in Bewegungsrichtung aus dem nächst größeren benachbarten Ringsteg herausgezogen. Bei einer weiteren Bewegung in dieser Richtung werden so nach und nach alle weiteren Ringstege von innen nach außen ausgestülpt, bis das Trägerelement eine zur Basis parallele Endposition erreicht hat. Die filmartigen Verbindungen zwischen den benachbarten Ringstegen haben somit quasi eine Art Scharnierwirkung.

Die einzelnen, die Falten bildenden Ringstege sind dabei vorzugsweise möglichst eng aneinander angereiht, damit jeder einzelne Ringsteg, wenn er aus seiner Ursprungslage herausgezogen wird, sich über einen Totpunkt hinwegbewegen muß, bis zu dem hin eine wachsende, durch die Geometrie und das Material bedingte Rückstellkraft wirkt. Nach Überschreiten des Totpunkts wird diese Kraft dann in der umgekehrten Richtung wirksam, d.h. zum Zurückführen des Ringsteges in die Ursprungslage wird, abgesehen von Erinnerungseffekten des Materials, eine ähnlich große Rückstellkraft benötigt. Bei jedem Ausstülpen eines Ringsteges tritt somit ein Schnappeffekt auf, wodurch das Trägerelement in einer stabilen Zwischenposition mit einem definiertem Winkel zur Basis eingerastet werden kann. Dieser Effekt kann daher zur Positionierung des Objekts bei einer Anbringung an geneigten Flächen genutzt werden.

Die Faltenscheibe ist vorteilhafterweise aus Kunststoff oder Gummimaterial. Sie kann z.B. auf relativ kostengünstige Weise in einem Kunststoffspritzverfahren hergestellt werden.

Die Basis weist einen Haltering auf, welcher den äußeren Rand der Faltenscheibe entlang ihres Umfangs einfaßt. Die Basis kann daher relativ flach ausgestaltet sein.

Der Haltering besteht vorzugsweise aus zwei halbringförmigen lösbar miteinander verbundenen Teilen. Das Objekt kann so mitsamt dem Trägerelement und der Faltenscheibe einfach von der Basis gelöst werden, was sowohl zur Vermeidung eines Diebstahls als auch zu Reinigungszwecken, z.B. beim Benutzen einer Waschanlage, sinnvoll ist.

Das Trägerelement kann einstückig mit der Faltenscheibe ausgebildet sein. Es ist jedoch vorteilhaft, wenn das Trägerelement lösbar mit der Faltenscheibe verbunden ist. Es ist dann in einem Schadensfalle jederzeit ein Austausch der Faltenscheibe möglich.

Das Trägerelement ist vorteilhafterweise drehbar mit der Faltenscheibe verbunden, so daß sich bei der Verwendung eines flachen Objekts, z.B. einer Signetplakette, das Objekt im Kollisionsfall, gegebenenfalls gegen einen geringen Widerstand, zusätzlich um eine senkrecht auf der Sockelfläche stehende Achse wegdreht.

Das Trägerelement kann z.B. ein Trägerstab sein, welcher an seinem einen Ende mit der Faltenscheibe verbunden ist, und an dessem anderen, freien Ende das Objekt angeordnet ist. Prinzipiell kann das Trägerelement aber, genau wie das Objekt selber, auch eine beliebige andere Form aufweisen. Insbesondere können Trägerelement und Objekt auch einstückig ausgebildet sein, d.h. das Trägerelement kann auch ein Teil des zu haltenden Objekts sein.

Die Erfindung wird im folgenden unter Hinweis auf die beigefügten Zeichnungen anhand von Ausführungsbeispielen näher erläutert. Es stellen dar:

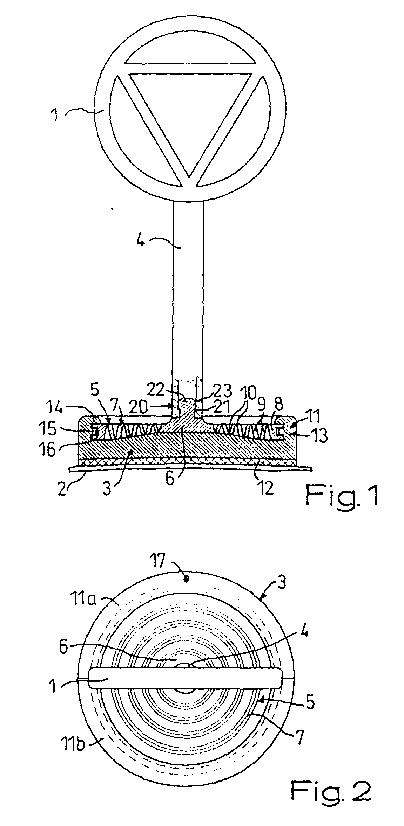

- Fig. 1: eine schematische Seitenansicht mit Teilschnitt eines ersten Ausführungsbeispieles einer erfindungsgemäßen Vorrichtung mit einer Signetplakette als Objekt in der Ursprungslage der Faltenscheibe,
- Fig. 2: eine Draufsicht auf die Vorrichtung gemäß Fig.1,
- Fig. 3: eine schematische Seitenansicht mit Teilschnitt einer erfindungsgemäßen Vorrichtung gemäß Fig. 1 in einer ersten Rastposition der Faltenscheibe mit einem ausgestülpten Ringsteg,
- Fig. 4: eine schematische Seitenansicht mit Teilschnitt einer erfindungsgemäßen Vorrichtung gemäß Fig. 1 in einer zweiten Rastposition der Faltenscheibe mit drei ausgestülpten Ringstegen,

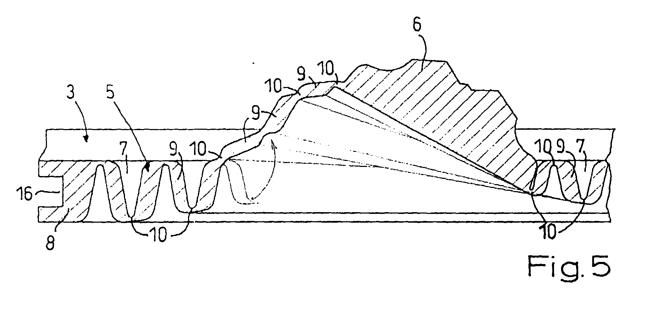

- Fig. 5: eine vergrößerte Darstellung eines Teils der Faltenscheibe in der Position nach Fig. 4,
- Fig. 6: eine perspektivische Ansicht eines zweiten Ausführungsbeispieles einer erfindungsgemäßen Vorrichtung (ohne Objekt),
- Fig. 7: eine perspektivische Explosionsdarstellung der Vorrichtung nach Fig. 6.

Die erfindungsgemäße Vorrichtung zum Halten von Objekten (1) an Fahrzeugkarosserien weist eine an der Karosserie (2) befestigte Basis (3) und ein mittels einer Faltenscheibe (5) mit der Basis (3) verbundenes, das Objekt (1) tragendes Trägerelement (4) auf.

Bei dem in den Figuren gezeigten Ausführungsbeispiel ist das Trägerelement (4) ein Trägerstab (4), welcher an seinem einen Ende mit der Faltenscheibe (5) verbunden ist, und an dessem anderen, freien Ende das Objekt (1) angeordnet ist. Der Trägerstab (4) ist hierbei einstückig mit dem Objekt (1), einer Art Signetplakette (1), ausgebildet.

Die Faltenscheibe (5) weist in ihrem Mittelpunktsbereich eine kreisförmige Sockelfläche (6) auf, an welcher das Trägerelement (4) mit der Faltenscheibe (5) verbunden ist. Um die Sockelfläche herum befinden sich mehrere ringförmige, konzentrische Falten (7). Diese Falten (7) sind in einer Ursprungslage, d.h. bei senkrecht zur Basis (3) stehendem Trägerstab (4), von konzentrischen, im Querschnitt axial parallel oder zick-zack-förmig zueinander angeordneten Ringstegen (9) gebildet, welche wechselweise entlang ihres oberen und unteren Randes durch filmartige Verbindungen (10) miteinander verkettet sind. Der innerste Ringsteg ist mit der Sockelfläche (6) verbunden und der äußerste Ringsteg ist mit einem äußeren Rand (8) der Faltenscheibe (5) verbunden, welcher entlang seines Umfangs von einem Haltering (11) der Basis (3) eingefaßt wird.

Die Basis ist hierzu als Basisplatte (3) mit einer außen umlaufenden, sich axial nach oben erstreckende Randkante (13) ausgebildet. Die Faltenscheibe (5) liegt im montierten Zustand passig innerhalb der Randkante (13) auf der Basisplatte (3) auf. Vom oberen Rand der Randkante erstreckt sich radial nach innen ein umlaufender ringförmiger Steg (14), welcher den äußeren Rand (8) der Faltenscheibe (5) nach oben abdeckt. Die Randkante (13) und der ringförmige Steg (14) der Basisplatte (3) bilden somit den Haltering (11), welcher den Rand (8) der Faltenscheibe (5) einfaßt.

Bei dem in den Figuren dargestellten Ausführungsbeispiel erstreckt sich ca. auf halber Höhe der Randkante (13) ein weiterer ringförmiger Steg (15) radial nach innen, welcher in eine entlang des Umfangs im Rand (8) der Faltenscheibe (5) verlaufende Nut (16) eingreift. Dadurch wird die Faltenscheibe (5) noch sicherer im Haltering (11) der Basisplatte (3) festgehalten. Selbstverständlich können statt nur eines weiteren ringförmigen Stegs auch noch mehrere übereinanderliegende ringförmige Stege innerhalb der Randkante angeordnet sein, welche in entsprechende Nuten der Faltenscheibe eingreifen. Ebenso können sich die Nuten innerhalb der Randkante befinden und die Faltenscheibe weist entlang ihres äußeren Umfangs entsprechende, sich radial nach außen erstreckende Stege auf.

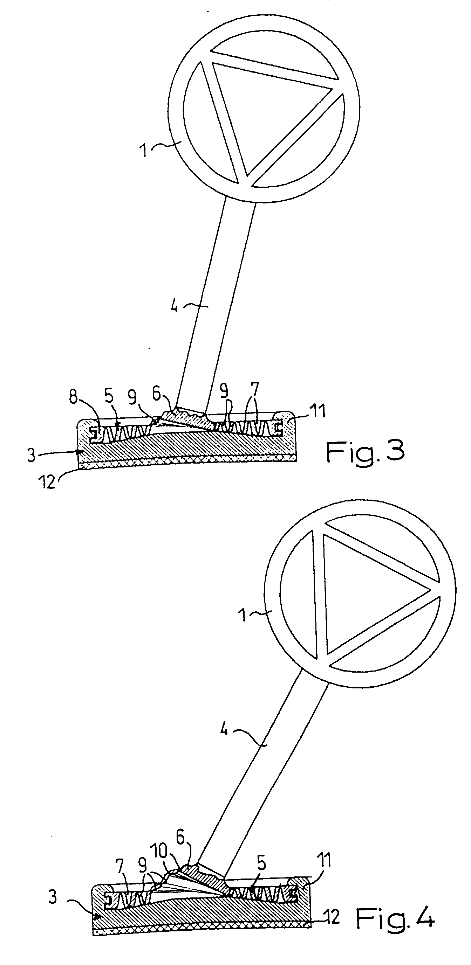

Bei einer Kippbewegung des Trägerstabs (4) gegenüber der Basisplatte (3) wird zunächst der mit der Sockelfläche (6) verbundene innerste Ringsteg in Bewegungsrichtung aus dem nächst größeren benachbarten Ringsteg herausgezogen (Fig. 3). Bei einer weiteren Bewegung in dieser Richtung werden so nach und nach alle weiteren Ringstege von innen nach außen ausgestülpt (Fig. 4), bis der Trägerstab (4) eine zur Basisplatte (3) parallele Endposition erreicht hat. Die filmartigen Verbindung (10) zwischen den benachbarten Ringstegen (9) wirken dabei nach Art eines Scharniers.

Die Ringstege (9) sind so eng aneinander angereiht, daß jeder einzelne Ringsteg (9), wenn er aus seiner Ursprungslage herausgezogen wird, sich über einen Totpunkt hinwegbewegen muß, bis zu dem hin eine wachsende Rückstellkraft wirkt. Nach Überschreiten des Totpunkts wird diese Kraft dann in der umgekehrten Richtung wirksam, d.h. zum Zurückführen des Ringsteges (9) in die Ursprungslage wird eine ähnlich große Rückstellkraft benötigt. Bei jedem Ausstülpen eines Ringsteges (9) tritt somit ein Schnappeffekt auf, wodurch der Trägerstab (4) in einer stabilen Zwischenposition mit einem definierten Winkel zur Basisplatte (3) eingerastet werden kann (z.B. ein Ringsteg ausgestülpt = ca. 15° Neigung, zwei Ringstege ausgestülpt = ca. 30° Neigung u.s.w.). Bei einem Ausführungsbeispiel beträgt z.B. der radiale Abstand zwischen zwei benachbarten Ringstegen (9) maximal ca. 1 mm.

Die Faltenscheibe (5) ist auf kostengünstige Weise in einem Kunststoffspritzverfahren hergestellt. Sie kann aber prinzipiell auch aus einer Kunststoffscheibe o.dgl. hergestellt sein, in welche wechselseitig von oben und unten ringförmige Nuten eingedreht werden, so daß nur noch entsprechende, durch dünne Verbindungen miteinander verkettete Ringstege (9) stehen bleiben.

Bei einem besonders bevorzugten Ausführungsbeispiel ist der von der Randkante (13) und dem ringförmigen Steg (14) der Basisplatte (3) gebildete Haltering (11), welcher den Rand (8) der Faltenscheibe (5) einfaßt, in zwei halbringförmige Teile (11a, 11b) unterteilt. Ein halbringförmiger Teil (11a) ist fest, der andere Teil (11b) lösbar, z.B. mittels eines Sicherungsstifts (17) oder einer Schraube, mit der Basisplatte (3) verbunden. Durch Zerlegen des Halterings (11) kann daher die Faltenscheibe (5) mit dem Trägerstab (4) und dem Objekt (1), z.B. zur Diebstahlsicherung oder beim Einfahren in eine Waschanlage, problemlos aus der Basis (3) entnommen werden.

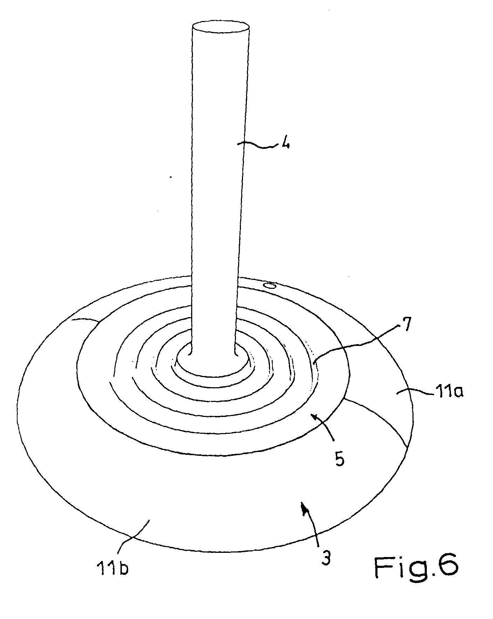

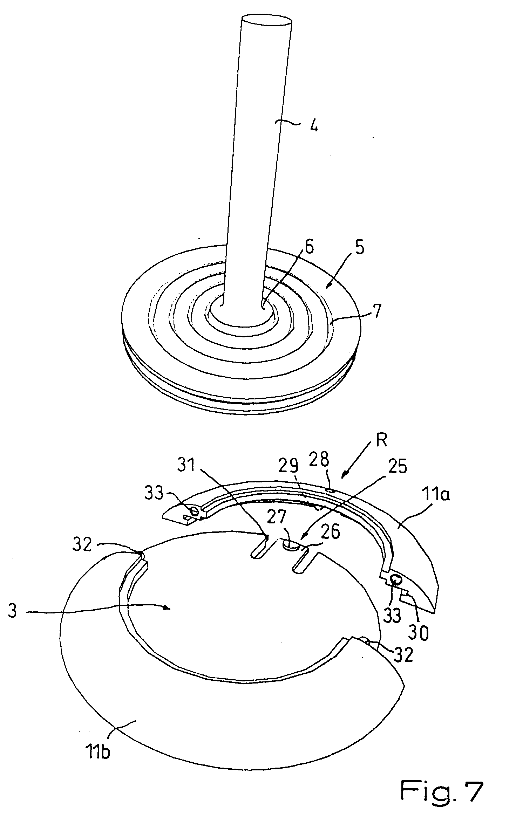

Fig. 6 und Fig. 7 zeigen ein besonders bevorzugtes Ausführungsbeispiel, bei dem der lösbare halbringförmige Teil (11a) des Halterings (11) mittels einer Rastverbindung (25) mit der Basisplatte (3) verbunden ist. Hierzu weist der Halbring (11a) eine im unteren Bereich entlang des inneren Umfangs verlaufende Führungsnut (30) auf, in welche im montierten Zustand ein sich entsprechend an der Basisplatte (3) radial nach außen erstreckender Rand (31) eingreift. Der lösbare Halbring (11a) wird dann einfach in eine Montagerichtung (R) senkrecht zur Trennebene zwischen den beiden Halbringen (11a,11b) seitlich auf die Basisplatte (3) aufgeschoben. Zur Stabilisierung befinden sich an den voreinanderstoßenden Trennflächen der Halbringe (11a,11b) Haltenocken (32) und entsprechende Löcher (33), welche im montierten Zustand formschlüssig ineinandergreifen. Um den Halbring (11a) an der Basisplatte (3) zu arretieren, weist diese eine durch zwei in kurzer Distanz nebeneinander, parallel zur Montagerichtung (R) liegende Einschnitte in die Basisplatte (3) gebildete federnde Zunge (26) mit einer sich endseitig nach oben erstreckenden Rastnase (27) auf. Diese rastet bei der Montage in eine entsprechende Aussparung (29) im Halbring (11a) ein. Oberhalb der Aussparung (29) befindet sich eine von oben durch den Halbring (11a) zur Aussparung (29) durchgehende Bohrung (28). Durch diese Bohrung (28) kann die Zunge (26) mit der Rastnase (27) mittels eines Stiftes (nicht dargestellt) niedergedrückt werden, um den Halbrings (11a) von der Basisplatte (3) zu lösen.

Die Faltenscheibe (5) ist vorzugsweise mit einer Schnappverbindung (20) mit dem Trägerstab (4) verbunden. Hierzu weist der Trägerstab (4) zumindest in seinem unteren Endbereich mit einer Bohrung versehen, d.h. rohrförmig ausgebildet. In dieser Bohrung befindet sich im unteren Endbereich eine radial nach innen gerichteter umlaufender Vorsprung oder ein Wulst (21). Die Sockelfläche (6) der Faltenscheibe (5) weist einen entsprechend angepaßten Zapfen (22) mit einem radial nach außen sich erstreckenden, umlaufenden Vorsprung oder einem Wulst (23) auf. Der Trägerstab (4) wird bei der Montage mit seiner Bohrung so auf den Zapfen (22) aufgeschoben, daß der Zapfen (22) in der Bohrung einrastet. Der nach innen gerichtete Wulst (21) in der Bohrung des Trägerstabs (4) befindet sich dann in einer zwischen dem nach außen gerichteten Wulst (23) des Zapfens (22) und der Sockelfläche (6) gebildeten Nut. Der Trägerstab (4) ist somit um eine senkrecht auf der Sockelfläche (6) stehende Achse drehbar mit der Faltenscheibe (5) verbunden, so daß das Objekt (1) somit insgesamt um drei zueinander senkrecht stehende Achsen schwenkbar mit der Basis (3) verbunden ist. Bei einer entsprechenden Ausgestaltung des unteren Ende des Trägerstabs (4), des Zapfens (22) bzw. den Wulsten (21, 23) ist diese Verbindung auch jederzeit durch einfaches Abziehen des Trägerstabs (4) vom Zapfen (22) lösbar, so daß die gesamte Halterung jederzeit in ihre Einzelteile zerlegt werden kann und z.B. die Faltenscheibe (5) bei einer Beschädigung ausgewechselt werden kann.

Bei einem nicht dargestellten Ausführungsbeispiel ist der Trägerstab (4) mittels einer von unten durch die Sockelfläche (6) der Faltenscheibe (4) in den Trägerstab (4) eingedrehten Schraube lösbar mit der Faltenscheibe (5) verbunden. Durch die Verbindung mittels der Schraube ist der Trägerstab (4) ebenfalls um eine senkrecht auf Sockelfläche (6) stehende Achse drehbar mit der Faltenscheibe (5) verbunden.

Ebenso kann natürlich auch der Trägerstab (4) einstückig mit der Faltenscheibe (5) ausgebildet sein und sich z.B. zwischen dem Objekt (1) und dem Trägerstab (4) eine entsprechende Rastverbindung der oben dargelegten Art befinden. Auch in diesem Fall ist das Objekt (1) um eine senkrecht auf Sockelfläche (6) stehende Achse drehbar mit der Faltenscheibe (5) verbunden.

Die Faltenscheibe (5) weist vorzugsweise auf ihrer vom Trägerelement (4) wegweisenden Unterseite eine konkave, kegelstumpfförmige Wölbung auf. Ohne eine derartige Wölbung wären die Kräfte, die zur Überwindung des Totpunkts nötig sind, bei den inneren Ringen wesentlich größer, als bei den äußeren Ringen. Die Wölbung hat in dieser Hinsicht also einen gewissen Kompensationseffekt.

Bei einem Ausführungsbeispiel weist die Basisplatte (3) entsprechend auf der zur Faltenscheibe (5) weisenden Oberseite eine an die Wölbung der Faltenscheibe (5) angepaßte, konvexe, kegelstumpfförmige Wölbung auf. Somit ist eine Ausstülpbewegung der Ringstege (9) nur in eine Richtung, nämlich nach oben, möglich. Die gewölbte Oberfläche der Basisplatte (3) dient als Auflage bzw. Drehpunkt bei der Kippbewegung (Fig. 3 und 4).

Bei einer anderen Ausführungsform ist die Basisplatte (3) mit einer flachen Oberfläche ausgestaltet oder weist sogar eine konkave Wölbung von der Faltenscheibe (5) weg auf, wobei zwischen Basisplatte (3) und Faltenscheibe (5) ein kuppelförmiger oder diskusförmiger Hohlraum entsteht. Durch einen solchen Hohlraum halbieren sich die Betätigungskräfte. Zudem verbessert sich die Haltekraft in der um 90° abgewinkelten Raststellung des Trägerelements (4), so daß diese Ausführungsform besonders für eine Befestigung von Objekten an nahezu senkrechten Wandteilen (z.B. am Heck eines Fahrzeugs) geeignet ist.

Die Basis (3) ist vorzugsweise z.B. mittels doppelseitigem Klebeband auf die Karosserie (2) aufgeklebt. Um auf gewölbten Karosserieoberflächen (2) eine bessere Haftung des Klebebandes zu erzielen, kann die Basis (3) eine leicht konkav gewölbte Unterseite aufweisen. Zusätzlich oder alternativ kann zwischen der Basis (3) und der Karosserie (2) eine plastisch verformbare Basisunterfütterung (12) angeordnet sein, so daß eine Anpassung an beliebige Oberflächen möglich ist. Diese Basisunterfütterung (12) kann auch beidseitig mit Kleber versehen sein und somit gleichzeitig die Funktion des Klebebandes übernehmen. Selbstverständlich kann die Basis (3) aber auch lösbar, z.B. mittels versenkter Schrauben an der Karosserie (2) befestigt sein.

Die gesamte erfindungsgemäße Vorrichtung ist einfach, kostengünstig und aus wenigen Teilen aufgebaut. Sie kann jederzeit ohne spezielle Kenntnisse vom Benutzer selbst montiert werden. Die Basisplatte (3) ist relativ flach aufgebaut, so daß die Haltevorrichtung unauffällig in den Hintergrund tritt und das Objekt selber eine entsprechende Wirkung erzielen kann. Trotzdem erfüllt die erfindungsgemäße Haltevorrichtung alle Sicherheitsvoraussetzungen.

## Patentansprüche

1. Vorrichtung zum Halten von Objekten (1) an Fahrzeugkarosserien, gekennzeichnet durch eine an der Karosserie (2) befestigte Basis (3) und ein mittels einer Faltenscheibe (5) mit der Basis (3) verbundenes, das Objekt (1) tragendes Trägerelement (4).

2. Vorrichtung nach Anspruch 1, dadurch gekennzeichnet, daß die Faltenscheibe (5) in ihrem Mittelpunktsbereich eine Sockelfläche (6) aufweist, an welcher das Trägerelement (4) mit der Faltenscheibe (5) verbunden ist, und um die Sockelfläche (6) herum mehrere ringförmige, konzentrische Falten (7) aufweist, und daß die Faltenscheibe (5) an ihrem äußeren Rand (8) zumindest punktuell entlang ihres Umfangs in oder an der Basis (3) gehalten ist.

3. Vorrichtung nach Anspruch 1 oder 2, dadurch gekennzeichnet, daß die Falten (7) der Faltenscheibe (5) in einer Ursprungslage von konzentrischen, im Querschnitt axial parallel oder zick-zack-förmig zueinander angeordneten Ringstegen (9) gebildet sind, welche wechselweise entlang ihres oberen und unteren Randes durch filmartige Verbindungen (10) miteinander verkettet sind, wobei der innerste Ringsteg mit der Sockelfläche (6) verbunden ist und der äußerste Ringsteg mit dem in oder an der Basis (3) gehaltenen Rand (8) verbunden ist.

4. Vorrichtung nach einem der Ansprüche 1 bis 3, dadurch gekennzeichnet, daß die Basis einen Haltering (11) aufweist, welcher den äußeren Rand (8) der Faltenscheibe (5) entlang ihres Umfangs einfaßt.

5. Vorrichtung nach Anspruch 4, dadurch gekennzeichnet, daß der Haltering (11) aus zwei halbringförmigen, lösbar miteinander verbundenen Teilen (11a, 11b) besteht.

6. Vorrichtung nach Anspruch 4 oder 5, dadurch gekennzeichnet, daß die Basis (3) eine Basisplatte (3) ist, auf der die Faltenscheibe (5) aufliegt, und deren äußerer Rand (11) als Haltering (11) ausgebildet ist.

7. Vorrichtung nach Anspruch 5 oder 6, dadurch gekennzeichnet, daß ein halbringförmiger Teil (11a) des Halterings (11) fest mit einer Basisplatte (3) verbunden ist und der andere Teil (11b) lösbar mit der Basisplatte (3) verbunden ist.

8. Vorrichtung nach Anspruch 7, dadurch gekennzeichnet, daß der lösbar mit der Basisplatte (3) verbundene halbringförmige Teil (11a) des Halterings (11) mittels einer Rastverbindung mit der Basisplatte (3) verbunden ist.

9. Vorrichtung nach einem der vorstehenden Ansprüche, dadurch gekennzeichnet, daß die Faltenscheibe (5) aus Kunststoff oder Gummimaterial ist.

10. Vorrichtung nach einem der vorstehenden Ansprüche, dadurch gekennzeichnet, daß die Faltenscheibe (5) auf ihrer vom Trägerelement (4) wegweisenden Unterseite eine konkave Wölbung aufweist.

11. Vorrichtung nach Anspruch 10, dadurch gekennzeichnet, daß die Basisplatte (3) auf der zur Faltenscheibe (5) weisenden Oberseite eine an die Wölbung der Faltenscheibe (5) angepaßte konvexe Wölbung aufweist.

12. Vorrichtung nach Anspruch 10, dadurch gekennzeichnet, daß die Basisplatte (3) eine zur Faltenscheibe (5) weisenden flache oder konkav gewölbte Oberseite aufweist.

13. Vorrichtung nach einem der vorstehenden Ansprüche, dadurch gekennzeichnet, daß die Basisplatte (3) eine konkav gewölbte Unterseite aufweist.

14. Vorrichtung nach einem der vorstehenden Ansprüche, dadurch gekennzeichnet, daß die Basis (3) auf die Karosserie (2) aufgeklebt ist.

15. Vorrichtung nach einem der vorstehenden Ansprüche, dadurch gekennzeichnet, daß die Basis (3) lösbar an der Karosserie (2) befestigt ist.

16. Vorrichtung nach einem der vorstehenden Ansprüche, dadurch gekennzeichnet, daß zwischen der Basis (3) und der Karosserie (2) eine Basisunterfütterung (12) angeordnet ist.

17. Vorrichtung nach einem der vorstehenden Ansprüche, dadurch gekennzeichnet, daß das Trägerelement (4) drehbar mit der Faltenscheibe (5) verbunden ist.

18. Vorrichtung nach einem der vorstehenden Ansprüche, dadurch gekennzeichnet, daß das Trägerelement (4) lösbar mit der Faltenscheibe (5) verbunden ist.

19. Vorrichtung nach einem der vorstehenden Ansprüche, dadurch gekennzeichnet, daß das Trägerelement (4) mittels einer Schnappverbindung (Rastverbindung) (20) mit der Faltenscheibe (5) verbunden ist.

20. Vorrichtung nach einem der vorstehenden Ansprüche, dadurch gekennzeichnet, daß das Trägerelement (4) ein Trägerstab (4) ist, welcher an seinem einen Ende mit der Faltenscheibe (5) verbunden ist, und an dessem anderen, freien Ende das Objekt (1) angeordnet ist.
